# EUROPÄISCHE PATENTSCHRIFT

(11) **EP 3 993 939 B1**
(45) Veröffentlichungstag und Bekanntmachung des Hinweises auf die Patenterteilung: **13.12.2023**
(21) Anmeldenummer: 20734671.9
(22) Anmeldetag: 18.06.2020
(51) Int. Cl.: B23D 61/12, B23D 65/00, B28D 1/12

(54) **BANDFÖRMIGES ZERSPANUNGSWERKZEUG MIT PUFFERPARTIKELN UND HERSTELLUNGSVERFAHREN**
STRIP-SHAPED CUTTING TOOL WITH BUFFER PARTICLES AND MANUFACTURING PROCESS
OUTIL DE COUPE EN FORME DE BANDE AVEC PARTICULES TAMPONS ET PROCÉDÉ DE FRABRICATION

(30) Priorität: 02.07.2019 DE 102019117796
(43) Veröffentlichungstag der Anmeldung: 11.05.2022
(73) Patentinhaber: WIKUS-Sägenfabrik Wilhelm H. Kullmann GmbH & Co. KG, 34286 Spangenberg (DE)
(72) Erfinder: KULLMANN, Jörg H., 34286 Spangenberg (DE); GLEIM, Patrick, 35279 Neustadt (DE)
(74) Vertreter: REHBERG HÜPPE + PARTNER
(86) Internationale Anmeldenummer: PCT/EP2020/066893
(87) Internationale Veröffentlichungsnummer: WO 2021/001157

(56) Entgegenhaltungen:
- EP-A1- 2 428 310
- EP-A1- 3 117 942
- EP-A2- 2 138 263
- DE-A1- 3 724 913
- DE-A1-102010 062 073

## Beschreibung

### TECHNISCHES GEBIET DER ERFINDUNG

Die Erfindung betrifft ein Zerspanungswerkzeug mit einem bandförmig ausgebildeten Zahntragekörper und einer Mehrzahl von Zähnen mit jeweils einer Zahnspitze, die zur Bildung einer Mehrzahl geometrisch unbestimmter Schneiden mit Schneidpartikeln belegt ist.

Derartige Zerspanungswerkzeuge mit geometrisch unbestimmten Schneiden werden im Unterschied zu Sägeblättern mit geometrisch bestimmten Schneiden häufig nicht zum Zerspanen bzw. Sägen von Metall, sondern von anderen Werkstoffen - wie insbesondere Glas, Graphit, Hartbrandkohle, Keramik, Silicium, Betonwerkstoffen, CFK, gesinterten Werkstoffen und Natursteinen - eingesetzt.

### STAND DER TECHNIK

Ein Zerspanungswerkzeug mit einem bandförmig ausgebildeten Zahntragekörper und einer Mehrzahl von Zähnen mit jeweils einer Zahnspitze, die zur Bildung einer Mehrzahl geometrisch unbestimmter Schneiden mit Schneidpartikeln belegt ist, ist als Sägeband der Marke "DIAGRIT" der Anmelderin beispielsweise aus dem Katalog "PRÄZISIONS-SÄGEBÄNDER", Ausgabe 2017, Seite 41 der Anmelderin bekannt.

Ein Zerspanungswerkzeug, das zur Bildung einer Mehrzahl geometrisch unbestimmter Schneiden mit Schneidpartikeln belegt ist, ist aus der deutschen Patentanmeldung DE 10 2010 062 073 A1 bekannt. Neben den Schneidpartikeln sind Schmiermittelstrukturen vorhanden, um die Reibung zu reduzieren.

Weitere Zerspanungswerkzeuge, die zur Bildung einer Mehrzahl geometrisch unbestimmter Schneiden mit Schneidpartikeln belegt sind, sind aus den Dokumenten WO 2005/084879 A1, DE 10 2016 100 897 A1, EP 0 569 770 A1, DE601 02 951 T2, DE298 14 668 U1, und WO 2013/078487 A1 bekannt.

Ein Zerspanungswerkzeug gemäß dem Oberbegriff des Anspruchs 1 und ein Verfahren gemäß dem Oberbegriff des Anspruchs 11 sind aus EP 3 117 942 A1 bekannt.

### AUFGABE DER ERFINDUNG

Der Erfindung liegt die Aufgabe zugrunde, ein Zerspanungswerkzeug mit geometrisch unbestimmten Schneiden bereitzustellen, mit dem Werkstücke effizient zerspant werden können und gleichzeitig ein guter Geradeauslauf des Zerspanungswerkzeugs gewährleistet ist.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft ein Zerspanungswerkzeug mit einem bandförmig ausgebildeten Zahntragekörper und einer Mehrzahl von Zähnen mit jeweils einer Zahnspitze, die zur Bildung einer Mehrzahl geometrisch unbestimmter Schneiden mit Schneidpartikeln belegt ist. Die Zahnspitze ist weiterhin mit Pufferpartikeln aus einem anderen Material als die Schneidpartikel belegt. Die Pufferpartikel befinden sich zwischen den Schneidpartikeln.

Die Erfindung betrifft weiterhin ein Verfahren zum Herstellen eines Zerspanungswerkzeugs mit einem bandförmig ausgebildeten Zahntragekörper und einer Mehrzahl von Zähnen. Eine Zahnspitze eines Zahns wird zur Bildung einer Mehrzahl geometrisch unbestimmter Schneiden mit Schneidpartikeln belegt. Die Zahnspitze des Zahns wird weiterhin derart mit Pufferpartikeln aus einem anderen Material als die Schneidpartikel belegt, dass sich die Pufferpartikel zwischen den Schneidpartikeln befinden.

### Definitionen

**Zerspanungswerkzeug**: Das mit dem Zerspanungswerkzeug ausgeführte Fertigungsverfahren wird gemäß DIN 8589-0 als Spanen bezeichnet. Gemäß dieser Norm wird beim Spanen zwischen dem Spanen mit geometrisch bestimmten Schneiden und dem Spanen mit geometrisch unbestimmten Schneiden unterschieden. Zum Spanen mit geometrisch bestimmten Schneiden gehört auch das Sägen gemäß DIN 8589-6. Das hier vorliegende Zerspanungswerkzeug arbeitet mit geometrisch unbestimmten Schneiden, so dass es sich gemäß den zuvor genannten Normen um kein Sägewerkzeug handelt. Aus diesem Grund wird in dieser Anmeldung der zutreffende verallgemeinerte Begriff des Zerspanungswerkzeugs verwendet. In der Praxis werden Zerspanungswerkzeuge aus diesem technischen Gebiet mit Schneidpartikeln aber auch als Sägebänder bzw. Sägeblätter bezeichnet.

**Schneidpartikel**: Unter Schneidpartikeln werden in dieser Anmeldung Teilchen verstanden, die das Zerspanen des Werkstücks bewirken. Sie bestehen aus einem Schneidstoff oder weisen diesen auf. Ein Schneidstoff ist ein Material, das zum Schneiden und Zerspanen von Werkstücken geeignet ist. Die Schneidpartikeln sind also gleichzeitig Schneidstoffpartikel.

**Pufferpartikel**: Unter Pufferpartikeln werden in dieser Anmeldung Teilchen verstanden, die durch Ihr Vorhandensein und ihre Anordnung Abstände zwischen den Schneidpartikeln bewirken und somit einen Puffer zwischen den Schneidpartikeln bilden. Erfindungsgemäß bewirken die Pufferpartikel zumindest

nicht letztendlich das Zerspanen des Werkstücks und sind daher keine Schneidpartikel. Die Pufferpartikel können aus unterschiedlichen Materialien bestehen. Dabei ist es aber auch möglich, dass die Pufferpartikel aus einem Schneidstoff bestehen oder diesen aufweisen. Die Pufferpartikel sind dann Schneidstoffpartikel, aber keine Schneidpartikel.

### Weitere Beschreibung

Die Zahnspitzen der Zähne des neuen Zerspanungswerkzeugs sind mit mindestens zwei verschiedenen Arten von Partikeln belegt, die unterschiedliche Eigenschaften aufweisen und denen unterschiedliche Funktionen zugeordnet sind.

Bei der ersten Art der Partikel handelt es sich um Schneidpartikel aus Schneidstoff, wie diese grundsätzlich aus dem Stand der Technik bekannt sind. Die Schneidpartikel bewirken das Zerspanen des Werkstücks. Bei der neuen zweiten Art der Partikel handelt es sich um Pufferpartikel, die dazu dienen, die durchschnittlichen Abstände zwischen den Schneidpartikeln zu vergrößern.

Im Stand der Technik besteht beim Belegen der Zahnspitze eines Zahns eines Zerspanungswerkzeugs mit Schneidpartikeln das Problem, dass sich sogenannte Nester mit einer hohen Anzahl von Schneidpartikeln pro Fläche und somit einer hohen Packungsdichte bilden. Dies führt dazu, dass sich beim Zerspanen in diesem Bereich eine Vielzahl von geometrisch unbestimmten Schneiden mit dem zu zerspanenden Material in Eingriff befindet, was in einer Reduzierung der Schnittleistung resultiert. Dadurch wird die Vorschubkraft zu groß, was wiederum dazu führt, dass das Zerspanungswerkzeug seitlich ausgelenkt wird. Hierdurch wird kein in der gewünschten Weise gerader Schnitt erreicht. Um dem entgegenzuwirken, kann zwar eine höhere Vorschubgeschwindigkeit verwendet werden. Dies führt aber dazu, dass in anderen Bereichen, in denen die Packungsdichte der Schneidpartikel geringer ist, diese Schneidpartikel einer zu großen Schnittkraft ausgesetzt werden und daher schneller verschleißen. Hierdurch wird die Standzeit des Zerspanungswerkzeugs reduziert.

Des Weiteren besteht im Stand der Technik das Problem, dass bei einer derart hohen Packungsdichte der Schneidpartikel nicht ausreichend Zwischenräume für das durch Zerspanen abgetragene Material des zu zerspanenden Werkstoffs vorhanden ist und somit nicht im erforderlichen Maß aus dem Schnittkanal heraustransportiert wird.

Diese Nachteile des Stands der Technik werden nun durch die neuen Pufferpartikel des neuen Zerspanungswerkzeugs beseitigt bzw. wesentlich reduziert. Durch die Pufferpartikel wird das Bilden von Nestern und eine zu große Packungsdichte der Schneidpartikel verhindert bzw. wesentlich reduziert. Die Pufferpartikel bilden eine Art Abstandshalter zwischen den Schneidpartikeln, so dass die gewünschten Abstände zwischen den geometrisch unbestimmten Schneiden der Schneidpartikel realisiert sind.

Die Pufferpartikel befinden sich zwischen den Schneidpartikeln, wobei dies nicht so zu verstehen ist, dass jeder Pufferpartikel genau zwischen zwei benachbarten Schneidpartikeln angeordnet sein muss. Die genaue Lage der Partikel ergibt sich beim Herstellungsverfahren meist im Sinne einer stochastischen Verteilung, so dass auch mehrere Pufferpartikel und/oder mehrere Schneidpartikel benachbart zueinander angeordnet sein können. Die andere Anordnung eines Pufferpartikels genau zwischen zwei Schneidpartikeln liegt aber auch vor.

Erfindungsgemäß werden die Pufferpartikel im später Verlauf des Herstellungsverfahrens, bei einem separaten Initialisierungsverfahren oder auch erst zu Beginn des Zerspanens entfernt.Hierdurch werden die erforderlichen Freiräume zwischen den Schneidpartikeln geschaffen, um das zerspante Material aus dem Schnittkanal abzuführen.

Die Schneidpartikel und die Pufferpartikel besitzen unterschiedliche physikalische Eigenschaften. Sie bestehen aus unterschiedlichen Materialien und/oder wurden unterschiedlich behandelt, so dass sie mindestens hinsichtlich einer physikalischen Eigenschaft einen Unterschied besitzen, der es ermöglicht, den Partikeln unterschiedliche Funktionen zuzuordnen.

Die unterschiedliche physikalische Eigenschaft zwischen Schneidpartikeln und Pufferpartikeln wird so gewählt und genutzt, dass der jeweilige Partikel seine gewünschte Funktion erbringt. Bei den Pufferpartikeln bedeutet dies, dass die von ihnen zunächst gebildeten geometrisch unbestimmten Schneiden später unwirksam gemacht oder entfernt werden.

Eine erste Möglichkeit ist, dass die Pufferpartikel eine geringere Härte als die Schneidpartikel besitzen. Diese geringere Härte wird so ausgenutzt, dass die Pufferpartikel bei einem Prozess, dem auch die Schneidpartikel unterliegen, abgetragen oder entfernt werden, während die Schneidpartikel erhalten bleiben. Dieser Prozess kann die Verwendung des Zerspanungswerkzeugs zum Zerspanen selbst oder ein anderer separate dafür vorgesehener Prozess sein. Beispielsweise kann es sich um einen Schritt des Herstellungsverfahrens der Zerspanungswerkzeuge handeln, mit dem die Pufferpartikel ganz oder teilweise entfernt werden.

Die Pufferpartikel können auch alternativ oder zusätzlich eine geringere Hitzebeständigkeit als die Schneidpartikel besitzen. Diese geringere Hitzebeständigkeit wird in dem Sinne ausgenutzt, dass das Zerspanungswerkzeug einem Wärmeprozess unterzogen wird, bei dem eine derart hohe Temperatur herrscht, die zum vollständigen oder teilweisen Entfernen der Pufferpartikel führt, während die Schneidpartikel erhalten bleiben.

Die Pufferpartikel können auch alternativ oder zusätzlich eine geringere chemische Beständigkeit als die Schneidpartikel besitzen. Diese geringere chemische Beständigkeit wird in dem Sinne ausgenutzt, dass das Zerspanungswerkzeug einem chemischen Prozess unterzogen wird, bei dem eine Substanz auf beide Arten von Partikeln trifft und zum vollständigen oder teilweisen Entfernen der Pufferpartikel führt, während die Schneidpartikel erhalten bleiben.

Die Schneidpartikel und die Pufferpartikel können in einer Metallschicht, insbesondere einer galvanischen Abscheidungsschicht oder einer chemischen Metallabscheidungsschicht, teilweise eingebettet sein. Das Belegen der Zahnspitze mit den Schneidpartikeln und den Pufferpartikeln erfolgt dann also im Rahmen eines Galvanisierungsprozesses oder eines chemischen Metallabscheidungsprozesses, bei dem eine Metallschicht auf der Zahnspitze aufgebaut wird und sich die Schneidpartikel und Pufferpartikel derart teilweise in der Metallschicht festsetzen, dass sie mit einem Teil ihrer Oberfläche fest in der Metallschicht angeordnet sind und mit dem anderen Teil ihrer Oberfläche aus der Metallschicht herausragen, so dass die geometrisch unbestimmten Schneiden der Schneidpartikel bei der Verwendung des Zerspanungswerkzeugs mit dem Material des zu zerspanenden Werkstücks in Kontakt treten können.

Die Metallschicht besteht aus Metall, insbesondere Nickel, Chrom oder Kupfer, das sich als Metallionen beim Galvanisieren oder der chemischen Metallabscheidung auf der Zahnspitze abgelagert hat. Die Metallionen und das Metall der Metallschicht sind dabei nicht die Pufferpartikel. Die Pufferpartikel sind zusätzliche Partikel, die von den Metallionen und dem Metall der Metallschicht zu unterscheiden sind.

Die Schneidpartikel und die Pufferpartikel können aber auch in einer anders ausgebildeten Bindungsschicht teilweise eingebettet sein. Dabei können insbesondere die folgenden Bindungsarten verwendet werden: Kunstharzbindung, Keramikbindung, gesinterte Metallbindung und galvanische Bindung.

Der belegte Teil der Zahnspitze kann zu zwischen etwa 10 und 60 %, insbesondere zwischen etwa 10 und 50 %, insbesondere zwischen etwa 20 und 50 %, insbesondere zwischen etwa 30 und 50 %, aus Pufferpartikeln bestehen. Dieser Anteil ist auf die belegte Fläche der Zahnspitze und nicht die Gesamtfläche der Zahnspitze bezogen. Normalerweise existieren auch solche Bereiche der Zahnspitze, die weder mit Schneidpartikeln noch mit Pufferpartikeln belegt sind. Wenn die Zahnspitze mit einer Metallschicht überzogen ist, wie dies oberhalb erläutert wurde, sind diese von Schneidpartikeln und Pufferpartikeln freien Bereiche also von der Metallschicht bedeckt. Die prozentuale Bedeckung des belegten Teils der Zahnspitze entspricht bei einer in etwa übereinstimmenden Größe der Schneidpartikel und der Pufferpartikel in etwa dem Mischungsverhältnis dieser Partikel, mit dem diese für den Belegungsprozess bereitgestellt werden. Die zuvor genannten Zahlenbereiche gewährleisten dabei unter Berücksichtigung der stochastischen Verteilung, dass hinreichend große Abstände zwischen den Schneidpartikeln realisiert werden, um die oberhalb beschriebenen negativen Effekte beim Zerspanen zu vermeiden.

Die Schneidpartikel und die Pufferpartikel können in etwa die gleiche durchschnittliche Größe besitzen. Wie oberhalb ausgeführt wurde, entspricht dann das Mischungsverhältnis vor dem Belegprozess in etwa dem Verhältnis der Partikel auf der belegten Zahnspitze. Es ist aber auch möglich, dass die Schneidpartikel und die Pufferpartikel unterschiedliche durchschnittliche Größen besitzen.

Die durchschnittliche Größe der Schneidpartikel und die durchschnittliche Größe der Pufferpartikel kann zwischen etwa 60 und 800 µm, insbesondere zwischen etwa 100 und 800 µm, insbesondere zwischen etwa 200 und 800 µm, insbesondere zwischen etwa 300 und 800 µm, insbesondere zwischen etwa 400 und 800 µm, insbesondere zwischen etwa 500 und 800 µm, insbesondere zwischen etwa 500 und 700 µm, insbesondere etwa 600 µm, betragen. Derartige Größenordnungen stellen sicher, dass die Schneidpartikel die gewünschten geometrisch unbestimmten Schneiden bereitstellen und durch die Pufferpartikel in der gewünschten Weise voneinander beabstandet sind.

Die Schneidpartikel können hart oder hochhart sein.

Unter harten Schneidpartikeln werden dabei insbesondere solche aus Korund (Al₂O₃) oder Siliciumcarbid (SiC) verstanden.

Die hochharten Schneidpartikel können monokristallinen Diamant (MKD), polykristallinen Diamant (CVD-D), polykristallinen Diamant (PKD), kubisches Bornitrid (CBN), Schneidkeramik, Hartmetall oder Kombinationen daraus aufweisen.

Die Pufferpartikel können monokristallinen Diamant (MKD), polykristallinen Diamant (CVD-D), polykristallinen Diamant (PKD), kubisches Bornitrid (CBN), Siliciumcarbid, Schneidkeramik, Hartmetall, Kunststoff, Glas, Keramik, Borcarbid, Nickel, Kupfer oder Kombinationen daraus aufweisen.

Die Schneidpartikel können kubisches Bornitrid (CBN) und die Pufferpartikel Diamant aufweisen. Da sich Diamant ab etwa 720 °C auflöst und CBN bei dieser Temperatur beständig ist, wird in diesem Fall die geringere Hitzebeständigkeit ausgenutzt, um die Pufferpartikel ganz oder teilweise zu entfernen.

Die Schneidpartikel können Diamant, Siliciumcarbid, Schneidkeramik, Hartmetall oder Kombinationen daraus aufweisen und die Pufferpartikel Kunststoff, Glas, Keramik, Borcarbid, Nickel, Kupfer oder Kombinationen aufweisen.

Es versteht sich, dass das Zerspanungswerkzeug nicht nur einen derart ausgebildeten Zahn, sondern eine Mehrzahl, insbesondere eine Vielzahl, derartiger Zähne aufweist. Es kann sich dabei um alle Zähne des Zerspanungswerkzeugs handeln. Es ist aber auch möglich, dass zusätzlich auch anders ausgebildete Zähne an dem Zerspanungswerkzeug angeordnet sind.

Das Zerspanungswerkzeug weist einen Zahntragekörper auf, an dem die Zähne angeordnet sind. Die Zähne können einstückig mit dem Zahntragekörper oder separat dazu ausgebildet sein. In letzterem Fall werden die Zähne oder Zahnspitzen in geeigneter Weise - insbesondere durch Schweißen oder Löten - mit dem Zahntragekörper oder Zahnvorsprüngen fest verbunden. Der Zahntragekörper weist eine langgestreckte bandförmige Ausbildung auf. Anders gesagt handelt es sich bei dem Zerspanungswerkzeug um ein einem Sägeband ähnliches Zerspanungsband.

Die Zähne sind an einer der Schmalseiten des bandförmig ausgebildeten Zahntragekörpers entlang dessen Länge angeordnet. Dies entspricht der Anordnung bei einem Sägeband und ist von der Anordnung bei einem Schleifband zu unterscheiden, bei dem keine Zähne vorhanden sind und die Schneidpartikel auf einer der Breitseiten des Schleifbands angeordnet sind.

Die Zähne können mit einer konstanten Teilung an dem Zahntragekörper angeordnet sein. Dies bedeutet, dass der Abstand zwischen den Zähnen gleichbleibend ist. Es ist aber auch möglich, dass die Zähne mit einer variablen Teilung an dem Zahntragekörper angeordnet sind. Dies bedeutet, dass die Abstände zwischen den Zähnen variieren. Dabei können insbesondere zwischen zwei und zehn unterschiedliche Abstände zwischen den Zähnen an dem Zerspanungswerkzeug existieren.

Der Zahntragekörper ist aus einem geeigneten Material ausgebildet. Dabei handelt es sich insbesondere um einen Metallwerkstoff. Beispiele sind Federstahl und legierter Vergütungsstahl.

Die zu zerspanenden Werkstoffe sind insbesondere nichtmetallische anorganische Werkstoffe und Verbundwerkstoffe. Bei diesen Werkstoffen handelt es sich insbesondere um Glas, Graphit, Hartbrandkohle, Keramik, Silicium, Betonwerkstoffe, CFK, gesinterte Werkstoffe und Natursteine. Es kann sich aber auch um Metalle handeln.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Zahn die Rede ist, ist dies so zu verstehen, dass genau ein Zahn, zwei Zähne oder mehr Zähne vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht eines Teils einer beispielhaften Ausführungsform des neuen Zerspanungswerkzeugs.
- **Fig. 2**: zeigt eine Seitenansicht des Zerspanungswerkzeugs gemäß Fig. 1.
- **Fig. 3**: zeigt eine Ansicht von oben auf das Zerspanungswerkzeug gemäß Fig. 1.
- **Fig. 4**: zeigt eine Ansicht von vorne des Zerspanungswerkzeugs gemäß Fig. 1.
- **Fig. 5**: zeigt eine Zahnspitze eines Zahns des Zerspanungswerkzeugs gemäß Fig. 1 in der Ansicht von vorne.
- **Fig. 6**: zeigt das Detail B der Zahnspitze aus Fig. 5.
- **Fig. 7**: zeigt eine andere Darstellung einer Zahnspitze eines Zahns des Zerspanungswerkzeugs unter Weglassung der meisten Partikel.
- **Fig. 8**: zeigt das Detail D der Zahnspitze aus Fig. 7.

### FIGURENBESCHREIBUNG

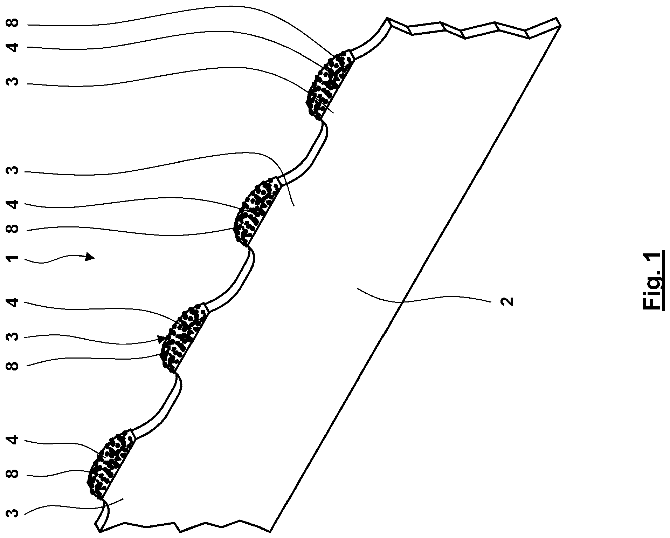

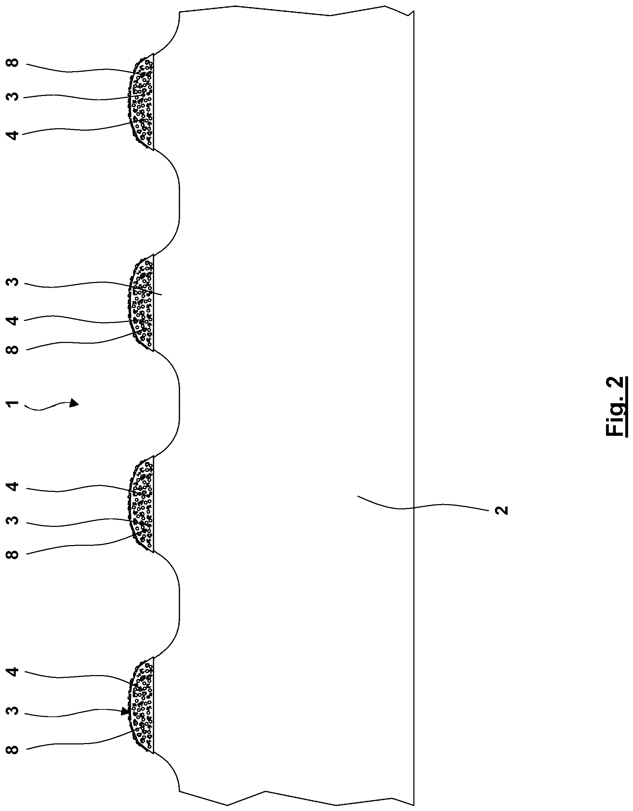

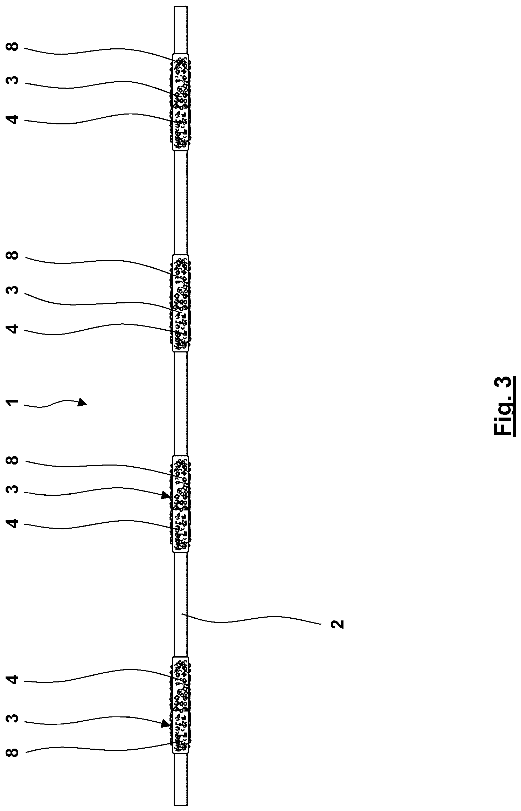

Fig. 1-8 zeigen verschiedene Ansichten einer beispielhaften Ausführungsform eines neuen Zerspanungswerkzeugs 1. Das Zerspanungswerkzeug 1 weist einen Zahntragekörper 2 auf. Im vorliegenden Fall handelt es sich um ein langgestrecktes bandförmiges Zerspanungswerkzeug 1, von dem nur ein Ausschnitt dargestellt ist. Es versteht sich, dass sich das Zerspanungswerkzeug 1 über die in Fig. 1 dargestellten Abbruchlinien entsprechend weiter erstreckt.

Das Zerspanungswerkzeug 1 weist eine Mehrzahl von an dem Zahntragekörper 2 angeordneten Zähnen 3 auf. Die Zähne 3 können ganz oder teilweise einstückig mit dem Zahntragekörper 2 ausgebildet sein. Im vorliegenden Beispiel sind die Zähne 3 mit einer konstanten Teilung an dem Zahntragekörper 2 angeordnet. Sie könnten aber auch mit einer variablen Teilung an dem Zahntragekörper 2 angeordnet sein.

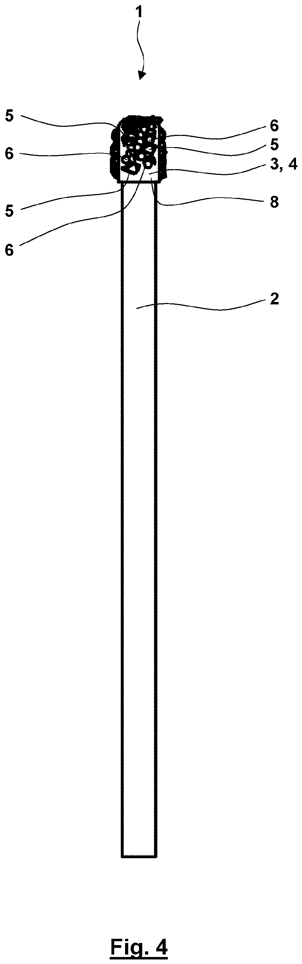

Die Zähne 3 weisen jeweils eine Zahnspitze 4 auf, die von dem Zahntragekörper 2 weg weist. Die Zahnspitze 4 ist mit Schneidpartikeln 5 und mit Pufferpartikeln 6 belegt. Die Partikel 5, 6 sind nur in den vergrößerten Darstellungen der Fig. 4-8 (teilweise) mit Bezugszeichen versehen, da sie in den Fig. 1-3 aufgrund ihrer geringen Größe nicht gut einzeln benennbar sind.

Die Schneidpartikel 5 und die Pufferpartikel 6 sind in einer Metallschicht 7 fest angeordnet und teilweise in dieser eingebettet. Sie ragen also teilweise aus der Metallschicht 7 heraus. Bei der Metallschicht 7 handelt es sich insbesondere um eine galvanische Abscheidungsschicht oder eine chemische Metallabscheidungsschicht.

Die Schneidpartikel 5 und die Pufferpartikel 6 unterscheiden sich hinsichtlich ihres Materials und ihrer zu erfüllenden Funktion. Hierzu wird auf die oberhalb angegebenen ausführlichen Ausführungen verwiesen.

Die Schneidpartikel 5, die Pufferpartikel 6 und die Metallschicht 7 bilden gemeinsam einen Belagbereich 8, der die gewünschte Zerspanungsfunktion des Zerspanungswerkzeugs 1 erbringt, indem er die dafür erforderlichen Schneiden beinhaltet. Dieser Belagbereich 8 erstreckt sich über die gesamte Zahnspitze 4 oder einen Teil der Zahnspitze 4. Dies ist der belegte Teil der Zahnspitze 4.

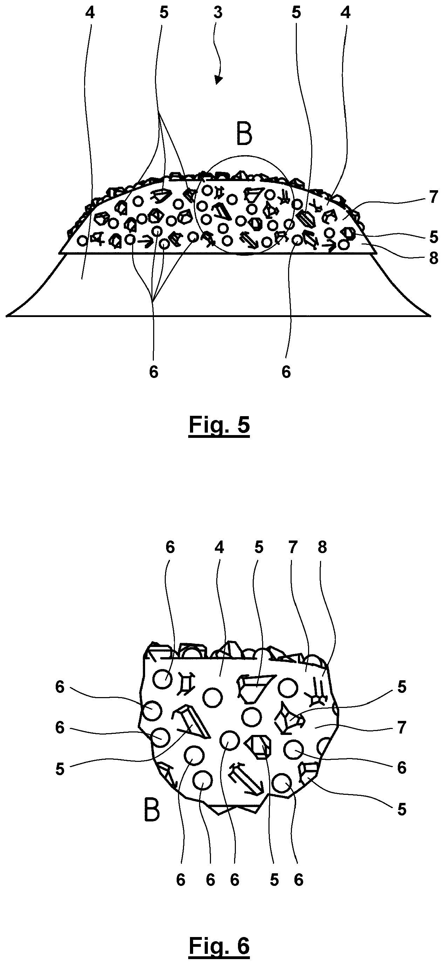

Die Anordnung der Schneidpartikel 5 und der Pufferpartikel 6 ist insbesondere in Fig. 6 gut erkennbar. Es versteht sich, dass es sich dabei um keine maßstabsgerechte Darstellung handelt und auch die Geometrie der Partikel 5, 6 in der Praxis anders aussieht oder aussehen kann. Die Partikel 5, 6 können auch in etwa die gleiche Geometrie besitzen. Die Darstellung soll die Partikel 5, 6 unterscheidbar machen und verdeutlichen, dass durch die Anordnung der Pufferpartikel 6 Freiräume zwischen den Schneidpartikeln 5 geschaffen werden, die bei einer reinen Anordnung von Schneidpartikeln 5 - wie dies im Stand der Technik bekannt ist - nicht oder nicht in diesem Ausmaß vorhanden sind.

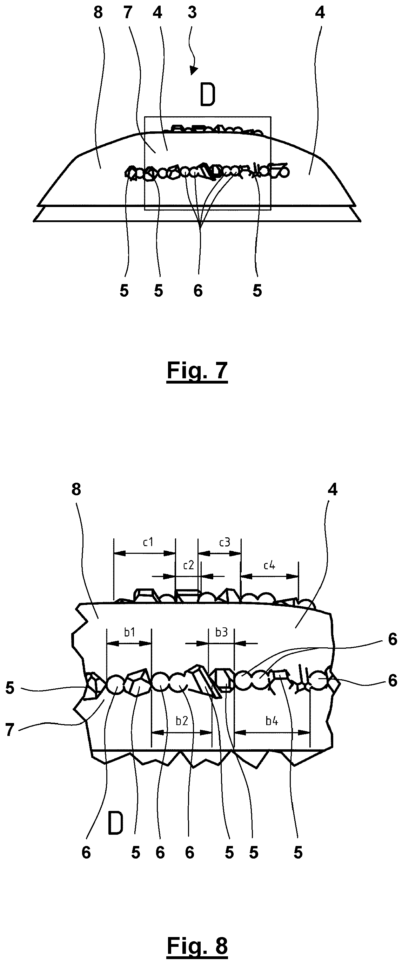

Fig. 8 ist eine symbolische Darstellung, mit der die durch die Pufferpartikel 6 erreichbaren Abstände zwischen den Schneidpartikeln 5 weiter verdeutlicht werden. Es ist anhand der eingezeichneten Abstände b1, b2, b3, b4, c1, c2, c3 und c4 erkennbar, dass die Abstände zwischen den Pufferpartikeln 6 unterschiedlich groß sind und eine derart nennenswerte Größe besitzen, dass das Bilden von Nestern von Schneidpartikeln 5 verhindert wird.

### BEZUGSZEICHENLISTE

- 1: Zerspanungswerkzeug
- 2: Zahntragekörper
- 3: Zahn
- 4: Zahnspitze
- 5: Schneidpartikel
- 6: Pufferpartikel
- 7: Metallschicht
- 8: Belagbereich

## Patentansprüche

1. Zerspanungswerkzeug (1) mit einem bandförmig ausgebildeten Zahntragekörper (2) und einer Mehrzahl von Zähnen (3) mit jeweils einer Zahnspitze (4), die zur Bildung einer Mehrzahl geometrisch unbestimmter Schneiden mit Schneidpartikeln (5) belegt ist, wobei die Zahnspitze (4) weiterhin mit Pufferpartikeln (6) aus einem anderen Material als die Schneidpartikel (5) belegt ist und sich die Pufferpartikel (6) zwischen den Schneidpartikeln (5) befinden, **dadurch gekennzeichnet, dass** die Pufferpartikel (6) in dem Herstellungsverfahren, bei einem separaten Initialisierungsverfahren oder zu Beginn des Zerspanens entfernt sind oder werden und nicht das Zerspanen des Werkstücks bewirken.

2. Zerspanungswerkzeug (1) nach Anspruch 1, **dadurch gekennzeichnet, dass** die Schneidpartikel (5) und die Pufferpartikel (6) in einer Metallschicht (7), insbesondere einer galvanischen Abscheidungsschicht oder einer chemischen Metallabscheidungsschicht, teilweise eingebettet sind.

3. Zerspanungswerkzeug (1) nach Anspruch 2, **dadurch gekennzeichnet, dass** die Metallschicht (7) aus Metall, insbesondere Nickel, Chrom oder Kupfer, besteht, das sich als Metallionen beim Galvanisieren oder der chemischen Metallabscheidung auf der Zahnspitze (4) abgelagert hat, und die Metallionen und das Metall der Metallschicht (7) nicht die Pufferpartikel (6) sind.

4. Zerspanungswerkzeug (1) nach mindestens einem der vorhergehenden Ansprüche, **dadurch gekennzeichnet, dass** der belegte Teil der Zahnspitze (4) zu zwischen etwa 10 und 60 %, insbesondere zwischen etwa 10 und 50 %, insbesondere zwischen etwa 20 und 50 %, insbesondere zwischen etwa 30 und 50 %, aus Pufferpartikeln (6) besteht.

5. Zerspanungswerkzeug (1) nach mindestens einem der vorhergehenden Ansprüche, **dadurch gekennzeichnet, dass** die Schneidpartikel (5) und die Pufferpartikel (6) in etwa die gleiche durchschnittliche Größe besitzen.

6. Zerspanungswerkzeug (1) nach mindestens einem der vorhergehenden Ansprüche, **dadurch gekennzeichnet, dass** die durchschnittliche Größe der Schneidpartikel (5) und die durchschnittliche Größe der Pufferpartikel (6) zwischen etwa 60 und 800 µm, insbesondere zwischen etwa 100 und 800 µm, insbesondere zwischen etwa 200 und 800 µm, insbesondere zwischen etwa 300 und 800 µm, insbesondere zwischen etwa 400 und 800 µm, insbesondere zwischen etwa 500 und 800 µm, insbesondere zwischen etwa 500 und 700 µm, insbesondere etwa 600 µm, beträgt.

7. Zerspanungswerkzeug (1) nach mindestens einem der vorhergehenden Ansprüche, **dadurch gekennzeichnet, dass** die Pufferpartikel (6)
eine geringere Härte, und/oder
eine geringere Hitzebeständigkeit
als die Schneidpartikel (5) besitzen.

8. Zerspanungswerkzeug (1) nach mindestens einem der vorhergehenden Ansprüche, **dadurch gekennzeichnet, dass**
die hochharten Schneidpartikel (5) monokristallinen Diamant (MKD), polykristallinen Diamant (CVD-D), polykristallinen Diamant (PKD), kubisches Bornitrid (CBN), Schneidkeramik, Hartmetall oder Kombinationen daraus aufweisen, und/oder
die Pufferpartikel (6) monokristallinen Diamant (MKD), polykristallinen Diamant (CVD-D), polykristallinen Diamant (PKD), kubisches Bornitrid (CBN), Siliciumcarbid, Schneidkeramik, Hartmetall, Kunststoff, Glas, Keramik, Borcarbid, Nickel, Kupfer oder Kombinationen daraus aufweisen.

9. Zerspanungswerkzeug (1) nach mindestens einem der Ansprüche 1 bis 7, **dadurch gekennzeichnet, dass**
die Schneidpartikel (5) kubisches Bornitrid (CBN) und die Pufferpartikel (6) Diamant aufweisen, oder
die Schneidpartikel (5) Diamant, Siliciumcarbid, Schneidkeramik, Hartmetall oder Kombinationen daraus aufweisen und die Pufferpartikel (6) Kunststoff, Glas, Keramik, Borcarbid, Nickel, Kupfer oder Kombinationen aufweisen.

10. Zerspanungswerkzeug (1) nach mindestens einem der vorhergehenden Ansprüche, **dadurch gekennzeichnet, dass** die Zähne (3) mit einer variablen Teilung an dem Zahntragekörper (2) angeordnet sind.

11. Verfahren zum Herstellen eines Zerspanungswerkzeugs (1) mit einem bandförmig ausgebildeten Zahntragekörper (2) und einer Mehrzahl von Zähnen (3), mit den folgenden Schritten:
Belegen einer Zahnspitze (4) eines Zahns (3) mit Schneidpartikeln (5) zur Bildung einer Mehrzahl geometrisch unbestimmter Schneiden,
Belegen der Zahnspitze (4) des Zahns (3) mit Pufferpartikeln (6) aus einem anderen Material als die Schneidpartikel (5) derart, dass sich die Pufferpartikel (6) zwischen den Schneidpartikeln (5) befinden, **gekennzeichnet durch**
Entfernung der Pufferpartikel (6) in dem Herstellungsverfahrens, bei einem separaten Initialisierungsverfahren oder zu Beginn des Zerspanens.

12. Verfahren nach Anspruch 11, **dadurch gekennzeichnet, dass** die Schritte des Belegens mit Schneidpartikeln (5) und Pufferpartikeln (6) gleichzeitig ausgeführt werden.

13. Verfahren nach Anspruch 11 oder 12, weiterhin **gekennzeichnet durch**
Aufbringen einer Metallschicht (7), insbesondere durch Galvanisieren oder chemische Metallabscheidung, auf die Zahnspitze (4) des Zahns (3) derart, dass die Schneidpartikel (5) und die Pufferpartikel (6) in der Metallschicht (7) teilweise eingebettet sind.

14. Verfahren nach Anspruch 13, **dadurch gekennzeichnet, dass** der Schritt des Aufbringens der Metallschicht (7) mindestens auch vor den Schritten des Belegens mit Schneidpartikeln (5) und Pufferpartikeln (6) ausgeführt wird.

15. Verfahren nach mindestens einem der vorhergehenden Ansprüche, **dadurch gekennzeichnet, dass** das Zerspanungswerkzeug (1) weiterhin Merkmale mindestens eines der Ansprüche 1 bis 10 aufweist.

## Claims

1. Chipping machining tool (1) comprising a band-shaped tooth supporting body (2) and a plurality of teeth (3) each comprising a tooth tip (4) which are covered with cutting particles (5) to form a plurality of geometrically undefined cutting portions, wherein the tooth tip (4) is covered with buffer particles (6) of a different material than the cutting particles (5), the buffer particles (6) being located between the cutting particles (5), **characterized in that** the buffer particles (6) have been or are removed during the manufacturing process, by a separate initialising process or at the start of the chipping machining and the buffer particles (6) do not cause the chipping machining of the workpiece.

2. Chipping machining tool (1) of claim 1, **characterized in that** the cutting particles (5) and the buffer particles (6) are partly embedded in a metal layer (7), in particular a galvanic deposition layer or a chemical metal deposition layer.

3. Chipping machining tool (1) of claim 2, **characterized in that** the metal layer (7) consists of metal, in particular nickel, chrome or copper, that has deposited on the tooth tip (4) as metal ions during galvanization or chemical metal deposition, the metal ions and the metal of the metal layer (7) not being the buffer particles (6).

4. Chipping machining tool (1) of at least one of the preceding claims, **characterized in that** the covered part of the tooth tip (4) consists of between approximately 10% and 60 %, in particular between approximately 10% and 50%, in particular between approximately 20% and 50%, in particular between approximately 30 % and 50 %, of buffer particles (6).

5. Chipping machining tool (1) of at least one of the preceding claims, **characterized in that** the cutting particles (5) and the buffer particles (6) have approximately the same average size.

6. Chipping machining tool (1) of at least one of the preceding claims, **characterized in that** the average size of the cutting particles and the average size of buffer particles (6) is between approximately 60 and 80 µm, in particular between approximately 100 and 800 µm, in particular between approximately 200 and 800 µm, in particular between approximately 300 and 800 µm, in particular between approximately 400 and 800 µm, in particular between approximately 500 and 800 µm, in particular between approximately 500 and 700 µm, in particular approximately 600 µm.

7. Chipping machining tool (1) of at least one of the preceding claims, **characterized in that** the buffer particles (6)
have a lower hardness and/or
a lower heat resistance
than the cutting particles (5).

8. Chipping machining tool (1) of at least one of the preceding claims, **characterized in that** the
the cutting particles (5) having a high hardness include monocrystalline diamond (MKD), polycrystalline diamond (CVD-D), polycrystalline diamond (PKD), cubic bornitride (CBN), cutting ceramics, hard metal or combinations thereof, and/or
the buffer particles (6) include monocrystalline diamond (MKD), polycrystalline diamond (CVD-D), polycrystalline diamond (PKD), cubic bornitride (CBN), silicon carbide, cutting ceramics, hard metal, plastic, glass, ceramics, boron carbide, nickel, copper or combinations thereof.

9. Chipping machining tool (1) of at least one of claims 1 to 7, **characterized in that**
the cutting particles (5) include cubic bornitride (CBN) and the buffer particles (6) include diamond, or
the cutting particles (5) include diamond, silicon carbide, cutting ceramics, hard metal or combinations thereof and the buffer particles (6) include plastic, glass, ceramics, boron carbide, nickel, copper or combinations thereof.

10. Chipping machining tool (1) of at least one of the preceding claims, **characterized in that** the teeth (3) are arranged at the tooth supporting body (2) at a variable division.

11. Method for manufacturing a chipping machining tool (1) comprising a band-shaped tooth supporting body (2) and a plurality of teeth (3), the method comprising the following steps:
depositing of cutting particles (5) on a tooth tip (4) of a tooth (3) to form a plurality of geometrically undefined cutting portions,
depositing of buffer particles (6) of a different material than the cutting particles (5) on the tooth tip (4) of the tooth (3) such that the buffer particles (6) are arranged between the cutting particles (5),
**characterized in that**
the buffer particles (6) are removed during the manufacturing process, by a separate initialising process or at the start of the chipping machining.

12. Method of claim 11, **characterized in that** the steps of depositing the cutting particles (5) and the buffer particles (6) are executed simultaneously.

13. Method of claim 11 or 12, further **characterized in that**
a metal layer (7) is applied, in particular by galvanization or chemical metal deposition, on the tooth tip (4) of the tooth (3) in a way such that the cutting particles (5) and the buffer particles (6) are partly embedded in the metal layer (7).

14. Method of claim 13, **characterized in that** the step of applying the metal layer (7) is at least also executed before executing the steps of depositing the cutting particles (5) and the buffer particles (6).

15. Method of at least one of the preceding claims, **characterized in that** the chipping machining tool (1) further comprises features of at least one of claims 1 to 10.

## Revendications

1. Outil à enlèvement de copeaux (1) avec un corps de support de dents (2) réalisé sous la forme d'un ruban et une pluralité de dents (3) avec chacune une pointe de dent (4) qui est munie de particules de coupe (5) pour la formation d'une pluralité de tranchants géométriquement indéterminés, dans lequel la pointe de dent (4) est en outre munie de particules tampons (6) constituées d'un matériau différent des particules de coupe (5) et les particules tampons (6) se trouvent entre les particules de coupe (5), **caractérisé en ce que** les particules tampons (6) sont éliminées dans le procédé de fabrication, lors d'un procédé d'initialisation séparé ou au début de l'enlèvement de copeaux et ne pas à l'usinage de la pièce.

2. Outil à enlèvement de copeaux (1) selon la revendication 1, **caractérisé en ce que** les particules de coupe (5) et les particules tampons (6) sont partiellement incorporées dans une couche métallique (7), plus particulièrement une couche de dépôt galvanique ou une couche de dépôt métallique chimique.

3. Outil à enlèvement de copeaux (1) selon la revendication 2, **caractérisé en ce que** la couche métallique (7) est constituée d'un métal, plus particulièrement de nickel, de chrome ou de cuivre, qui s'est déposé sous la forme d'ions métalliques lors de la galvanisation ou du dépôt métallique chimique sur la pointe de dent (4) et les ions métalliques et le métal de la couche métallique (7) ne sont pas les particules tampons (6).

4. Outil à enlèvement de copeaux (1) selon au moins l'une des revendications précédentes, **caractérisé en ce que** la partie occupée de la pointe de dent (4) est constituée, à hauteur d'environ 10 à 60 %, plus particulièrement d'environ 10 à 50 %, plus particulièrement d'environ 20 à 50 %, plus particulièrement d'environ 30 à 50 %, de particules tampons (6).

5. Outil à enlèvement de copeaux (1) selon au moins l'une des revendications précédentes, **caractérisé en ce que** les particules de coupe (5) et les particules tampons (6) présentent approximativement la même taille moyenne.

6. Outil à enlèvement de copeaux (1) selon au moins l'une des revendications précédentes, **caractérisé en ce que** la taille moyenne des particules de coupe (5) et la taille moyenne des particules tampons (6) est entre environ 60 et 800 µm, plus particulièrement entre environ 100 et 800 µm, plus particulièrement entre environ 200 et 800 µm, plus particulièrement entre environ 300 et 800 µm, plus particulièrement entre environ 400 et 800 µm, plus particulièrement entre environ 500 et 800 µm, plus particulièrement entre environ 500 et 700 µm, plus particulièrement de 600 µm.

7. Outil à enlèvement de copeaux (1) selon au moins l'une des revendications précédentes, **caractérisé en ce que** les particules tampons (6) présentent
une dureté plus faible et/ou
une résistance à la chaleur plus faible
que les particules de coupe (5).

8. Outil à enlèvement de copeaux (1) selon au moins l'une des revendications précédentes, **caractérisé en ce que**
les particules de coupe à haute dureté (5) comprennent du diamant monocristallin (MKD), du diamant polycristallin (CVD-D), du diamant polycristallin (PKD), du nitrure de bore cubique (CBN), de la céramique de coupe, du métal dur ou des combinaisons de ceux-ci et/ou
les particules de coupe (6) comprennent du diamant monocristallin (MKD), du diamant polycristallin (CVD-D), du diamant polycristallin (PKD), du nitrure de bore cubique (CBN), du carbure de silicium, de la céramique de coupe, du métal dur, une matière plastique, du verre, de la céramique, du carbure de bore, du nickel, du cuivre ou des combinaisons de ceux-ci.

9. Outil à enlèvement de copeaux (1) selon au moins l'une des revendications 1 à 7, **caractérisé en ce que**
les particules de coupe (5) comprennent du nitrure de bore cubique (CBN) et les particules tampons (6) comprennent du diamant ou
les particules de coupe (5) comprennent du diamant, du carbure de silicium, de la céramique de coupe, du métal dur ou des combinaisons de ceux-ci et les particules tampons (6) comprennent une matière plastique, du verre, de la céramique, du carbure de bore, du nickel, du cuivre ou des combinaisons de ceux-ci.

10. Outil à enlèvement de copeaux (1) selon au moins l'une des revendications précédentes, **caractérisé en ce que** les dents (3) sont disposées avec un pas variable sur le corps de support de dents (2).

11. Procédé de fabrication d'un outil à enlèvement de copeaux (1) avec un corps de support de dents (2) en forme de ruban et une pluralité de dents (3), avec les étapes suivantes :
équipement de la pointe de dent (4) d'une dent (3) avec des particules de coupe (5), pour la formation d'une pluralité de tranchants géométriquement indéterminés,
équipement de la pointe de dent (4) de la dent (3) avec des particules tampons (6) constituées d'un matériau différent des particules de coupe (5), de sorte que les particules tampons (6) se trouvent entre les particules de coupe (5),
**caractérisé par** l'élimination des particules tampons (6) dans le procédé de fabrication, lors d'un procédé d'initialisation séparé ou au début de l'enlèvement de copeaux.

12. Procédé selon la revendication 11, **caractérisé en ce que** les étapes d'équipement avec des particules de coupe (5) et des particules tampons (6) sont exécutées simultanément.

13. Procédé selon la revendication 11 ou 12, caractérisé, en outre, parallèle l'application d'une couche métallique (7), plus particulièrement par galvanisation ou dépôt métallique chimique, sur la pointe de dent (4) de la dent (3), de sorte que les particules de coupe (5) et les particules tampons (6) sont partiellement incorporées dans la couche métallique (7).

14. Procédé selon la revendication 13, **caractérisé en ce que** l'étape d'application de la couche métallique (7) est exécutée également au moins avant les étapes d'équipement avec les particules de coupe (5) et les particules tampons (6).

15. Procédé selon au moins l'une des revendications précédentes, **caractérisé en ce que** l'outil à enlèvement de copeaux (1) présente en outre des caractéristiques d'au moins une des revendications 1 à 10.
